# EUROPÄISCHE PATENTSCHRIFT

(11) **EP 3 371 800 B1**
(45) Veröffentlichungstag und Bekanntmachung des Hinweises auf die Patenterteilung: **28.10.2020**
(21) Anmeldenummer: 16788698.5
(22) Anmeldetag: 01.11.2016
(51) Int. Cl.: G08G 1/16, G01S 7/00, G01S 13/82, G01S 13/93, G01S 13/931, G01S 17/931

(54) **VERFAHREN UND VORRICHTUNG ZUR AUSWAHL UND ÜBERTRAGUNG VON SENSORDATEN VON EINEM ERSTEN ZU EINEM ZWEITEN KRAFTFAHRZEUG**
METHOD AND DEVICE FOR SELECTING AND TRANSMITTING SENSOR DATA FROM A FIRST MOTOR VEHICLE TO A SECOND MOTOR VEHICLE
PROCÉDÉ ET DISPOSITIF DE SÉLECTION ET DE TRANSMISSION DE DONNÉES DE CAPTEURS D'UN PREMIER À UN DEUXIÈME VÉHICULE

(30) Priorität: 02.11.2015 DE 102015221439
(43) Veröffentlichungstag der Anmeldung: 12.09.2018
(73) Patentinhaber: Continental Automotive GmbH, 30165 Hannover (DE)
(72) Erfinder: SCHILD, Bernhard, 35576 Wetzlar (DE)
(86) Internationale Anmeldenummer: PCT/EP2016/076288
(87) Internationale Veröffentlichungsnummer: WO 2017/076827

(56) Entgegenhaltungen:
- EP-A1- 2 693 230
- EP-B1- 2 122 598
- DE-A1-102008 042 565
- US-A1- 2002 198 660
- US-A1- 2014 009 307

## Beschreibung

### Gebiet der Technik

Die vorliegende Erfindung betrifft ein Verfahren zur drahtlosen Übermittlung von Sensordaten zwischen Fahrzeugen sowie eine entsprechende Vorrichtung.

### Hintergrund

Drahtlose Kommunikationsnetze werden heutzutage in einer Vielzahl von technischen Anwendungsgebieten eingesetzt. Im Bereich der Automobiltechnik ist es bekannt, dass Fahrzeuge über die sogenannte Car-to-Car-Kommunikation untereinander Informationen austauschen. Bei dieser Kommunikation handelt es sich um ein drahtloses ad hoc-Netzwerk, welches zwischen räumlich benachbarten Fahrzeugen im Straßenverkehr aufgebaut wird und technisch auf einem weiterentwickelten WLAN-Netz (WLAN = Wireless Local Area Network) gemäß dem Standard IEEE 802.11 beruht.

Im Bereich der Car-to-Car-Kommunikation wird eine drahtlose Funkverbindung zwischen Fahrzeugen beispielsweise dazu eingesetzt, die von der Sensorik eines Fahrzeugs ermittelten Informationen an andere Fahrzeuge in räumlicher Nachbarschaft zu übertragen. Hierdurch können insbesondere Informationen bezüglich Gefahrenstellen von einem Fahrzeug schnell an andere Fahrzeuge übermittelt werden. Bei diesem Verfahren wird jedoch nicht von dem Fahrzeug, welches diese Informationen drahtlos empfängt, spezifiziert, von welchem Fahrzeug bestimmte Informationen empfangen werden sollen. Außerdem sind die übertragenen Daten abstrakter Natur und wenig detailliert. Die aus dem Stand der Technik bekannten Verfahren eignen sich somit nicht zu einer gezielten Informationsübermittlung von einem Fahrzeug zum anderen, und es wird keine Übertragung von detaillierten Daten angeboten, die geeignet ist, einen Fahrer unmittelbar in einer schlecht zu überblickenden Verkehrssituation zu unterstützen. Insbesondere können die bisher bekannten Car-to-Car Kommunikationsarchitekturen, die z. B. auch auf Mobilfunknetzwerke zurückgreifen, keine ausreichend geringe Latenzzeiten, etwa im einstelligen Millisekundenbereich, bei der Nachrichtenübertragung garantieren. Ferner lässt die hier gezeigte Vorgehensweise eine Authentisierung bzgl. des Absenders zu, die u. A. auf klassische Methoden der Funkpeilung zurückgehen. Diese Authentisierung ist für andere Car-to-Car Kommunikationsmethoden wie Wifi und Bluetooth oder DSRC nicht so präzise möglich, weil deren Sender nicht so exakt auf einen Punkt im drei-dimensionalen Raum ausgerichtet werden können wie bei der hier beschriebenen Vorgehensweise. Ferner kann die Sensor-Funktionalität des AE-SA-Radars hier genutzt werden, um quasi parallel zum Kommunikationsvorgang Abstandsmessungen von einem empfangenden zweiten Fahrzeug zu einem sendenden ersten Fahrzeug zwecks Überwachung vorzunehmen. Damit ist eine schnelle Fehlererkennung für diesen Typ Kommunikationsverbindung im einstelligen Millisekundenbereich möglich. Das kann so von andern Arten der Car-to-Car Kommunikation nicht geleistet werden.

Eine Einbettung von einigen hier vorgestellten Funktionalitäten in eine ADASIS Architektur wäre im Prinzip möglich, wird aber in den folgenden Beschreibungen nicht weiter verfolgt. Ferner könnte man sich auch Verwendungen von z. B. DSRC und WLAN ITS-g5 vorstellen. Aber die hier vorgeschlagene Beispiel-Lösung für die Kommunikation unter der Verwendung eines AESA Radars erfüllt Anforderungen an Latenzzeit, Zuverlässigkeit und Authentisierung, die bei anderen Verfahren noch in Diskussion sind bzw. prinzipbedingt nicht geleistet werden können. Deshalb wird in den folgenden Darstellungen auf Bezüge zu diesen Konzepten verzichtet.

Die DE 10 2006 055 344 A1 zeigt die Verwendung von Daten über die Verkehrssituation in der Umgebung eines ersten Fahrzeugs in einem zweiten Fahrzeug, welches sich in relativer Nähe zu dem ersten Fahrzeug befindet. Dabei werden die in dem zweiten Fahrzeug empfangenen Daten zumindest teilweise über ein Ausgabemittel für dessen Fahrer wahrnehmbar ausgegeben. Nach einer selektiven Identifikation des ersten Fahrzeugs werden gezielt die Daten dieses Fahrzeugs empfangen, die für den Fahrer des ersten Fahrzeugs unmittelbar relevant sind. Die Identifikation des ersten Fahrzeugs erfolgt bei der D1 durch eine Kennzeichen- bzw. Nummernschilderkennung mittels einer Kamera oder über den Austausch von Geo-Positionsdaten. Die empfangenen Daten umfassen unter anderem ein von einer in dem ersten Fahrzeug vorgesehenen Kamera aufgenommenes Videobild oder abstrahierte Daten wie beispielsweise eine Distanz zwischen dem ersten Fahrzeug und einem diesem vorausfahrenden Fahrzeug oder Distanz und Geschwindigkeit eines entgegenkommenden Fahrzeugs.

Die DE 199 14 906 A1 offenbart ein Kommunikationssystem zur gezielten Kommunikation zwischen unabhängig voneinander angetriebenen Fahrzeugen, welches durch Ausrichtung einer Kommunikationseinrichtung und Anpassung einer Kommunikationsreichweite auf die Position eines Fahrzeuges, mit dem eine Kommunikationsaufnahme gewünscht ist, eine exakte Adressierung ermöglicht.

Die US 2014/0009307 A1 offenbart die Koordination von Sensoren mehrerer Fahrzeuge in einem Kollisionsvermeidungssystem. Dabei kann ein erstes Fahrzeug ein Sensorsystem eines zweiten Fahrzeugs konfigurieren.

### Begriffsklärungen

Der Begriff Position steht für einen Aufenthaltsort auf der Erdoberfläche oder in bzw. auf einem für den Straßenverkehr vorgesehenen oder geeigneten Bauwerk. Je nach Kontext kann eine Position auch die Repräsentation eines Aufenthaltsorts in einer Land- oder Straßenkarte bezeichnen.

Ein Kraftfahrzeug ist im Kontext dieser Beschreibung ein auf der Erdoberfläche oder in bzw. auf mit dieser verbundenen Bauwerken verkehrendes, von einem Motor angetriebenes Fahrzeug.

Der Begriff Verkehrsraum steht in dieser Beschreibung für eine Oberfläche, auf der Fahrzeuge, bewegt oder nicht bewegt, am Verkehr teilnehmen. Dabei kann der Verkehrsraum sich auch in unterschiedlichen Ebenen ausdehnen, beispielsweise bei Brücken oder Unterführungen. Wenn nicht anders angegeben bezeichnet der Begriff Verkehrsraum im Kontext dieser Beschreibung eine nähere Umgebung eines Kraftfahrzeugs, wobei der umfasste Radius auch abhängig von der Fahrgeschwindigkeit des Kraftfahrzeugs und der Komplexität des Verkehrsraums abhängig sein kann. Insbesondere kann der Verkehrsraum eine nicht regelmäßige Form mit unterschiedlicher Ausdehnung in unterschiedlichen Richtungen haben, beispielsweise ein Rechteck, das in Fahrtrichtung des Kraftfahrzeugs eine längere Ausdehnung hat als zu den Seiten oder nach hinten.

Die Angabe "relativ zu einem Fahrzeug" steht in dieser Beschreibung für eine Richtung und/oder Entfernung zu einem Fahrzeug. Eine übliche Einordnung erfolgt dabei auf einem Umkreis um das Fahrzeug entweder in Gradzahlen, wobei 0 Grad vorne liegen und 180 Grad hinten, oder in Anlehnung an ein Zifferblatt einer Uhr in Stunden und ggf. Minuten. In letzterem Fall steht 12 Uhr für vorne, und 6 Uhr für hinten.

Der Begriff Orientierung steht für eine Ausrichtung eines Fahrzeugs im Verkehrsraum, wobei die Ausrichtung sich an einer Front oder einem Heck eines Fahrzeugs orientiert. Dabei wird davon ausgegangen, dass die Front eines Fahrzeugs auch mit "vorne" und das Heck eines Fahrzeugs auch als "hinten" referenziert wird.

Der Begriff "Azimut" beschreibt eine horizontale Ausrichtung eines Sensors, beispielsweise eine Schwenkung nach links oder rechts aus einer durch den Einbauort und die Einbaulage des Sensors bestimmten Nulllage heraus, oder eine horizontale Schwenkung, die sich an einer absoluten Null-Referenz orientiert, beispielsweise an der Richtung des Nordpols der Erde von einem aktuellen Ort aus gesehen. Entsprechend beschreibt der Begriff "Elevation" eine vertikale Ausrichtung eines Sensors, beispielsweise einen Winkel zwischen Horizont und Richtung des Sensors.

Zusammen mit den bei Radarmessungen üblichen Distanzbestimmungen können insbesondere mit AESA-Radars dreidimensionale Scans von Raumsektoren erfolgen, indem man z. B. unter Verwendung des elektronischen Strahlschwenkens den abtastenden Radarstrahl variiert. Auf die schon seit Jahren bekannten Techniken des Radar-Imaging wie SAR, ISAR usw. wird an dieser Stelle nicht weiter eingegangen.

"Lidar" ist die Abkürzung des englischen Begriffs "Light detection and ranging". Lidar ist eine dem Radar (Radio detection and ranging) verwandte Methode zur optischen Abstands- und Geschwindigkeitsmessung. Statt Radiowellen werden Lichtstrahlen, insbesondere Laserstrahlen verwendet. Um einen Bereich zu erfassen wird der Lichtstrahl definiert über den Bereich bewegt, ähnlich wie die zeilenweise Abtastung in einem Fernsehgerät mit Kathodenstrahlröhre, wobei die Abtastung beim Lidar mittels einem oder mehreren beweglichen Spiegeln erfolgt.

Unter Benutzung eines AESA Radars kann man unter Verwendung des elektronischen Strahlschwenkens auch drei-dimensionale Scans von ausgewählten Teilen der sichtbaren Fahrzeugumgebung erstellen, die dann in einem Imaging Prozess zu einer sichtbaren Darstellung aufbereitet werden können. Dabei wird vorher i. A. eine Datafusion mit anderen vorhandenen Sensordaten z. B. auch optischer Systeme wie Kameras ausgeführt und zwecks Abgleich eine Datenbereinigung z. B. mittels Kalman Filterung durchgeführt.

### Technische Aufgabe

Es ist eine Aufgabe der Erfindung, ein Verfahren und eine Vorrichtung zur drahtlosen Kommunikation zwischen Fahrzeugen zu schaffen, welche eine effizientere Assistenz für den Fahrer eines Kraftfahrzeugs bei schwer zu überblickenden Verkehrssituationen bieten.

### Technische Lösung

Diese Aufgabe wird durch die unabhängigen Patentansprüche gelöst. Weiterbildungen der Erfindung sind in den abhängigen Ansprüchen definiert.

Bei einem erfindungsgemäßen Verfahren zur Darstellung von Sensordaten eines ersten Kraftfahrzeugs über ein Mensch-Maschine-Interface eines zweiten Kraftfahrzeugs wird ein Bild zumindest eines Teils einer Umgebung des zweiten Kraftfahrzeugs aufgenommen und über das das Mensch-Maschine-Interface des zweiten Kraftfahrzeugs wiedergegeben. Auf dem Bild der Umgebung sind ein oder mehrere erste Kraftfahrzeuge zumindest teilweise abgebildet. Die Anzeige erfolgt beispielsweise auf einem im Sichtfeld des Fahrers angeordneten Bildschirm. Die Anzeige kann auch so erfolgen, dass jeweilige Positionen und Orientierungen der ersten Kraftfahrzeuge im Verkehrsraum relativ zu dem zweiten Kraftfahrzeug schematisch dargestellt sind. Die Bestimmung der Positionen und Orientierungen der ersten Kraftfahrzeuge im Verkehrsraum relativ zu dem zweiten Kraftfahrzeug kann bei Verwendung eines Stereokamera-Systems besonders einfach ausgeführt werden. Mittels einer geeigneten Objekterkennungs-Software können insbesondere andere Kraftfahrzeuge identifiziert werden, denen dann entsprechende Koordinaten in einem dreidimensionalen Raum zugewiesen werden. Die Objekterkennung ermöglicht es auch, zu den als Kraftfahrzeug identifizierten Objekten entsprechende Silhouetten zu bestimmen.

Ein Fahrer oder Bediener wählt eines oder mehrere der ersten Kraftfahrzeuge aus, von denen Sensordaten empfangen werden sollen. Die Auswahl kann beispielsweise durch Berühren eines jeweiligen Kraftfahrzeugs auf einem berührungsempfindlichen Bildschirm erfolgen, auf dem das Bild der Umgebung wiedergegeben wird. Wenn eine Gestenerkennung vorhanden ist, kann die Auswahl auch durch entsprechendes Zeigen auf ein oder mehrere auf einem Bildschirm abgebildete erste Kraftfahrzeuge erfolgen. Andere Auswahlverfahren, beispielsweise durch Platzieren eines Cursors auf oder in der Nähe eines auf dem Bildschirm abgebildeten Kraftfahrzeugs sind ebenfalls denkbar, wobei die Steuerung des Cursors in grundsätzlich bekannter Weise erfolgen kann.

Nach erfolgter Auswahl werden ein oder mehrere individuelle erste Punkt-zu-Punkt-Verbindungen von dem zweiten zu dem oder den ausgewählten ersten Kraftfahrzeugen über eine erste drahtlose Kommunikationsschnittstelle aufgebaut. Eine Identifikation des einen oder mehreren ersten Kraftfahrzeuge kann dabei beispielsweise über eine Kennzeichenerkennung erfolgen. Zweckmäßigerweise stellt in diesem Fall das Kennzeichen gleichzeitig eine Identifikation für einen Verbindungsaufbau dar. Es ist jedoch auch möglich, dass Kraftfahrzeuge periodisch Identifikationssignale aussenden, die von anderen Kraftfahrzeugen empfangen und für einen Verbindungsaufbau genutzt werden können.

Der Aufbau der einen oder mehreren individuellen ersten Punkt-zu-Punkt-Verbindungen kann beispielsweise nach entsprechender Ausrichtung einer ersten Sende- oder Empfangsvorrichtung in Richtung der entsprechenden ein oder mehreren ersten Kraftfahrzeuge erfolgen. Die Ausrichtung der ersten Sende- oder Empfangsvorrichtung kann beispielsweise anhand von zuvor aus dem Bild der Umgebung des zweiten Kraftfahrzeugs ermittelten Azimut- und Elevationswinkeln für das oder die ausgewählten ersten Kraftfahrzeuge erfolgen. So können, wenn der Punkt, den der Fahrer oder Bediener auf dem Bildschirm ausgewählt hat in die Silhouette eines Kraftfahrzeugs fällt, aus der bekannten Position des zweiten Kraftfahrzeugs und den bekannten Eigenschaften der Kamera, mit der das Bild der Umgebung des zweiten Kraftfahrzeugs aufgenommen wurde, die entsprechenden Winkel zur Ausrichtung der ersten Sende- oder Empfangsvorrichtung bestimmt werden. Optional, z. B. bei der Verwendung von Radar, kann die Identität des so ausgewählten Fahrzeugs bzgl. der aktuell gemessenen Entfernung zusätzlich unter Berücksichtigung der Azimut und Elevation Werte plausibilisiert werden. Wenn die Einbauorte für Radarsysteme oder Lidarsysteme in Kraftfahrzeugen standardisiert sind, beispielsweise stets mittig zwischen den Scheinwerfern der Kraftfahrzeuge, kann mittels der zuvor beschriebenen Objekterkennung der Ort, auf den die Sende- oder Empfangsvorrichtung ausgerichtet ist entsprechend genauer eingestellt werden. Der Aufbau von Punkt-zu-Punkt-Verbindungen über ausgerichtete Sende- und Empfangsvorrichtungen ermöglicht es, auf die Verwendung anderer Identifikationsmerkmale für einen Verbindungsaufbau zu verzichten. Insbesondere kann bei Verwendung eines AESA Radars das Beamforming zum Aufbau einer optimalen Richtfunkstrecke von den jeweiligen Fahrzeugen, etwa den ersten Fahrzeugen, an die angesprochenen anderen Fahrzeuge, etwa den zweiten Fahrzeugen, so ausgerichtet werden, dass nur die angesprochenen Fahrzeuge auf den Aufbau der Punkt-zu-Punkt Verbindung reagieren und die nicht betroffenen dies ignorieren. Dazu akzeptiert ein Fahrzeug den Empfang von elektromagnetische Wellen nur dann von einem Fahrzeug, wenn diese von dem sendenden Fahrzeug auf das empfangende Fahrzeug gerichtet sind und das empfangende Fahrzeug von dem sendenden Fahrzeug auch eine Übertragung erwartet. Dies kann mit klassischen Mitteln der Funkpeilung/Funkortung verifiziert werden.

Nach erfolgtem Aufbau der einen oder mehreren individuellen ersten Punkt-zu-Punkt-Verbindungen wird an das oder die ausgewählten ersten Kraftfahrzeuge eine Anfrage gesendet, Informationen zu verfügbaren Sensoren und deren Eigenschaften an das zweite Kraftfahrzeugs übertragen.

In Antwort auf die Anfrage empfängt das zweite Kraftfahrzeug Antworten von einem oder mehreren der ausgewählten ersten Kraftfahrzeuge über die jeweiligen ersten Punkt-zu-Punkt-Verbindungen und gibt eine schematische Darstellung der Umgebung des zweiten Kraftfahrzeugs wieder, wobei die schematische Darstellung Positionen des zweiten und der ein oder mehreren ersten Kraftfahrzeuge in der Umgebung des zweiten Kraftfahrzeugs zeigt, und wobei in der schematischen Darstellung Bereiche dargestellt werden, innerhalb derer die Sensoren der einen oder mehreren ersten Kraftfahrzeuge und/oder des zweiten Kraftfahrzeugs Objekte erfassen können. Diese Bereiche können beispielsweise in der schematischen Darstellung farblich oder durch eine entsprechende Textur gekennzeichnet sein. In der schematischen Darstellung der Umgebung können außerdem Objekte gezeigt werden, die sich in der Umgebung des zweiten Kraftfahrzeug und/oder in den jeweiligen Umgebungen der ein oder mehreren ersten Kraftfahrzeuge befinden. Zu den Objekten gehören unter anderem Begrenzungen von Straßen, Häuser und dergleichen, aber auch andere im Verkehrsraum befindliche Objekte, die von Sensoren erfasst wurden.

Das Mensch-Maschine-Interface des zweiten Kraftfahrzeugs empfängt eine Benutzereingabe, die einer Auswahl eines oder mehrerer der in der schematischen Darstellung gezeigten Kraftfahrzeuge bzw. deren Sensoren und eines von dem oder den ausgewählten Sensoren zu erfassenden Bereichs entspricht, und sendet eine entsprechende Anfrage an ein oder mehrere erste Kraftfahrzeuge, deren Sensoren den zu erfassenden Bereich erfassen können. Wenn ein in der schematischen Darstellung zu erfassender Bereich nur von Sensoren eines der ein oder mehreren ersten Kraftfahrzeuge erfasst werden kann wird die Anfrage auch nur an dieses eine erste Kraftfahrzeug gesendet. Anderenfalls kann die Anfrage an alle ersten Kraftfahrzeuge gesendet werden, deren Sensoren den zu erfassenden Bereich erfassen können. Die Anfrage zur Erfassung eines Bereichs kann Informationen zu Azimut und Elevation eines Sensors enthalten, wahlweise aus Sicht des zweiten Kraftfahrzeugs oder aus Sicht des jeweiligen ersten Kraftfahrzeugs, dessen Sensor den Bereich erfassen soll. Die Auswahl eines von einem Sensor zu erfassenden Bereichs, insbesondere die Einengung eines zu erfassenden Bereichs bewirkt eine Verringerung der Menge der zu übertragenden Daten, wodurch eine schnellere Wiedergabe der Sensordaten in dem zweiten Kraftfahrzeug erfolgen kann.

Das oder die ersten Kraftfahrzeuge, die eine Anfrage zur Erfassung eines Bereichs empfangen haben, führen entsprechende Sensormessungen durch und übertragen die Messergebnisse an das zweite Kraftfahrzeug. Im einfachsten Fall wird als Messergebnis das Vorhandensein eines Objekts in dem erfassten Bereich und dessen Koordinaten gemeldet, oder, wenn kein Objekt detektiert wurde, eine entsprechende Meldung, dass kein Objekt detektiert wurde. In Ausführungsformen des erfindungsgemäßen Verfahrens können weitere Informationen über detektierte Objekte gemeldet werden, beispielsweise deren Abmessungen oder Konturen und, wenn mehrere Messungen zyklisch nacheinander ausgeführt wurden, ob und in welche Richtung sich detektierte Objekte bewegen.

Das entsprechende System in dem zweiten Kraftfahrzeug empfängt die von dem einen oder den mehreren ersten Kraftfahrzeugen in Antwort auf die Anfrage gesendeten Sensordaten und gibt sie über das Mensch-Maschine-Interface des zweiten Kraftfahrzeugs wieder. Wenn Sensordaten von mehreren ersten Kraftfahrzeugen empfangen wurden, werden diese, gegebenenfalls nach einer entsprechenden Datenfusion, gemeinsam wiedergegeben. Wenn keine Messung ausgeführt wurde wird auch dieses "Nicht-Ergebnis" entsprechend wiedergegeben. Zusätzlich zu einer visuellen Wiedergabe kann ein akustisches Signal zu jeder Messung wiedergegeben werden, wobei auch unterschiedliche akustische Signale für detektierte Objekte und Nicht-Detektion von Objekten verwendet werden können. Ebenfalls kann haptisches Feedback zur Signalisierung der Messergebnisse verwendet werden. Beispielsweise kann, wenn ein Finger eines Bedieners oder Fahrers des zweiten Kraftfahrzeugs auf einem berührungsempfindlichen Bildschirm verharrt, während die Messung durch das oder die ersten Fahrzeuge ausgeführt wird, eine entsprechende Vibration das Vorhandensein eines Objekts in dem durch die Position des Fingers ausgewählten, zu erfassenden Bereich signalisieren. Der Verzicht auf eine zeitaufwendige Erstellung einer visuellen Darstellung aus den Messdaten des oder der Sensoren des oder der ersten Kraftfahrzeuge führt dabei zu einer schnelleren Rückmeldung.

Anstelle der Aufteilung in eine erste Anfrage, um zu ermitteln, welche Sensoren welchen Bereich erfassen können, und eine zweite Anfrage mit dem spezifischen Erfassungsauftrag, kann auch direkt eine einzige Anfrage mit einem spezifischen Erfassungsauftrag gesendet werden. Wenn eine Erfassung gemäß der gewünschten Spezifikationen nicht möglich ist, wird der Erfassungsauftrag in diesem Fall entweder nicht ausgeführt, oder es wird eine Erfassung vorgenommen, die den Spezifikationen des Auftrags bestmöglich entspricht.

Bei einer Ausgestaltung der Erfindung erfolgt eine zyklische Wiederholung der Messung durch den oder die Sensoren des oder der ersten Kraftfahrzeuge und eine entsprechende Übermittlung und Aktualisierung der Messergebnisse bei der Wiedergabe durch das Mensch-Maschine-Interface des zweiten Kraftfahrzeugs. Die Zeitintervalle, in denen die Messung wiederholt wird, können dabei von einem Benutzer einstellbar sein oder automatisch angepasst werden. Eine automatische Anpassung ist beispielsweise in Abhängigkeit von der momentanen Geschwindigkeit des ersten oder des zweiten Kraftfahrzeugs möglich.

Bei einer Ausgestaltung des erfindungsgemäßen Verfahrens erfolgt das Senden der Anfrage an das oder die ausgewählten ersten Kraftfahrzeuge über jeweilige individuelle erste Punkt-zu-Punkt-Verbindungen, welche über die erste drahtlose Kommunikationsschnittstelle aufgebaut werden. Das Empfangen der Antworten erfolgt über eine jeweilige zweite Punkt-zu-Punkt-Verbindung, welche über eine zweite drahtlose Kommunikationsschnittstelle aufgebaut wird. Beispielsweise arbeitet die erste drahtlose Kommunikationsschnittstelle nach dem IEEE 802.11 Standard, und darüber aufgebaute Punkt-zu-Punkt-Verbindungen sind logische Punkt-zu-Punkt-Verbindungen. Die zweite drahtlose Kommunikationsschnittstelle verwendet beispielsweise ein in dem ersten und dem einen oder mehreren zweiten Fahrzeugen vorgesehenes Radarsystem oder Lidarsytem, und darüber aufgebaute Punkt-zu-Punkt-Verbindungen sind physikalische Punkt-zu-Punkt-Verbindungen, bei denen Sender und Empfänger über einen fokussierten und zwischen Sender und Empfänger ausgerichteten Radar- oder Lichtstrahl miteinander kommunizieren. Die Kommunikation über einen fokussierten zwischen Sender und Empfänger ausgerichteten Radarstrahl ist aus der militärischen Luftfahrt bekannt. Hierbei werden Radarsysteme mit aktiver elektronischer Strahlschwenkung und Apertursteuerung auch bekannt als Aktives Phased-Array-Radar oder Active Electronically Scanned Array (AESA) verwendet, welche auf Halbleiterbausteinen basieren, somit auch im Automotivebereich eingesetzt werden können. Die Einführung des AESA in der Militärluftfahrt hat dazu geführt, dass mit ein und demselben Radar Gerät parallel verschiedene Aufträge ausgeführt werden können, die vorher von separaten Geräten bearbeitet worden sind. Deshalb können mit einem einzigen AESA Radar verschiedene Sensor- und Kommunikationsaufgaben (quasi-) parallel bearbeitet werden, quasi-parallel bedeutet hier, dass sich die Aufgaben innerhalb kurzer hintereinander folgender Zeitschlitze abwechseln. In der vorliegenden Anwendung im Automotivebereich bedeutet das insbesondere, dass bei Verwendung eines AESA Radars grundsätzlich die Möglichkeit zur (quasi-) parallelen Ausführung extern angestoßener Sensor-Aufgaben besteht. Ferner kann man ad-hoc durch entsprechendes Beamforming die Funktionalität einer breitbandigen Richtfunkstrecke, gerichtet auf einen ausgewählten Kommunikationspartner, aufbauen. Diese Richtfunkstrecke braucht jeweils nur für einen kurzen Zeitschlitz zu bestehen damit das AESA Radar im nächsten wieder für andere Aufgaben, z. B. eigene oder fremde Sensor-Aufgaben, zur Verfügung. Eine entsprechende Kommunikation über einen Lichtstrahl insbesondere über einen Laserstrahl, kann über einen in einem Fahrzeug vorgesehenen optischen Scanner erfolgen, welcher auf einen entsprechenden Empfänger in dem anderen Fahrzeug ausgerichtet ist. Es ist natürlich auch möglich, die gesamte Kommunikation über eine Kommunikationsschnittstelle abzuwickeln.

Wenn man das AESA Radar zur Übermittelung von Sensordaten vom sendenden Fahrzeug aus mit Beamforming im Sinne einer Richtfunkstrecke auf das empfangene Fahrzeug ausrichtet, kann das empfangene Fahrzeug die Quelle, d. h. den Sender der Sensordaten mit klassischen Mitteln der Funkpeilung/Funkortung geometrisch, d. h. unter Berücksichtigung von Azimut, Elevation und Distanz, unter Beruecksichtigung dessen Sichtbarkeit bzgl. der ursprünglichen Auswahl der Fahrzeuge authentisieren. Ferner kann bei quasiparallel geführter Distanzmessung auch eine Unterbrechung dieser "Richtfunkstrecke" sofort erfasst werden, also eine Fehlererkennung mit einstelligen Millisekundenbereich gewährleisten. Zwecks Verifikation kann die Sensorerfassung des ersten Fahrzeugs durch das zweite Fahrzeug periodisch vorübergehen auf gemeinsam erfassbare Bereiche des Verkehrsraums gelenkt werden, um die korrekte Funktionalität zu überprüfen. Ein zweites Fahrzeug kann also permanent periodisch eine Diagnose der verwendeten Sensoren in einem ersten Fahrzeug laufen lassen.

Diese zur Übernahme von Sensordaten notwendigen Sicherungs-Eigenschaften wie Authentisierung und schnelle Fehlererkennung können andere Car-to-Car Kommunikationsmethoden nicht leisten.

Bei einer Ausführung der vorstehend beschriebenen Ausgestaltung des erfindungsgemäßen Verfahrens erfolgt die Übertragung von Sensordaten zwischen den Fahrzeugen mittels eines EASA-Radars. Anstelle von Radardaten können jedoch auch Live-Bilder einer in dem ersten Fahrzeug angeordneten Videokamera zu dem zweiten Fahrzeug übertragen werden. Die hohe Bandbreite, die die Datenübertragung über einen gerichteten Radarstrahl bereitstellt, ermöglicht eine nahezu latenzfreie Übertragung von Sensordaten, z. B. eine Videobildübertragung selbst unkomprimierter Videosignale. Die Übertragung unkomprimierter Videosignale hat dabei den Vorteil, dass die kompressionsbedingte Latenz entfällt. Die direkte Übertragung von Sensordaten ohne jede Vorverarbeitung aus einem ersten Fahrzeug zu einem zweiten Fahrzeug ermöglicht dann auch eine Verarbeitung dieser Daten in z. B. dem ADAS-System des zweiten Fahrzeugs unter kontrollierbaren, geringen Latenzzeiten bzgl. deren Erfassung. Damit sind diese vertrauenswürdiger als über Car-to-Car gemeldete Ereignisse, es kann sogar eine Datafusion mit den von lokalen Sensoren gemeldeten Daten erfolgen. Der Fahrer des zweiten Fahrzeuges kann sich somit in Echtzeit einen Überblick über die Verkehrssituation aus der Sicht des ersten Fahrzeugs verschaffen. Zusätzlich zu dem Videobild können von dem Radarsystem des ersten Fahrzeugs ermittelte Daten zu Objekten im Erfassungsbereich des Radarsystems des ersten Fahrzeugs übermittelt werden und zusammen mit dem Videobild wiedergegeben werden. Zusätzliche Informationen umfassen unter anderem Abstandsinformationen zwischen dem Objekt und dem zweiten Fahrzeug sowie die im ersten Fahrzeug gemessene Geschwindigkeit und Bewegungs-Richtung des Objekts, falls vorhanden.

Ansonsten kann mit der Echtzeitübertragung der Bildinhalte (visuelle Daten oder Scan Ergebnisse z. B. von Radarsensoren) und anderer Sensordaten eine Datafusion im z. B. ADAS System eines zweiten Fahrzeugs von lokalen und entfernten Sensordaten erfolgen. Damit können u. A. z. B. mit Methoden des Kalman Filterns verbesserte Vorhersagen über das Verhalten von gerade den Objekten, etwa Fahrzeuge, Fußgänger usw., erfolgen, die den Scan-Bereich der eigenen Sensoren, evtl. auch nur kurzfristig, verlassen haben. Eine solche Vorhersage kann dem Fahrer z. B. visuell in Form von Augmented Reality übermittelt werden.

Bei einer Ausführung des erfindungsgemäßen Verfahrens wird, wenn ein erstes Kraftfahrzeug einen Erfassungsbereich des zweiten Kraftfahrzeugs verlässt oder wenn eine Kommunikation zwischen den beiden Fahrzeugen nicht mehr möglich ist, die Anzeige des Mensch-Maschine-Interfaces entsprechend aktualisiert. Dabei kann nicht nur ein das erste Kraftfahrzeug repräsentierendes Symbol entfernt werden, sondern auch Messergebnisse der von diesem Kraftfahrzeug ausgeführten Messungen. Die Aktualisierung kann dabei unmittelbar oder nach Ablauf einer Wartezeit erfolgen.

Eine in einem zweiten Kraftfahrzeug vorgesehene Vorrichtung zur Ausführung des erfindungsgemäßen Verfahrens umfasst mindestens einen Sensor, der dazu eingerichtet ist, ein oder mehrere erste Kraftfahrzeuge in der Umgebung zu detektieren. Der Sensor ist beispielsweise eine Kameraanordnung, die mit einer entsprechenden Einrichtung zur Objekterkennung verbunden ist. Die Vorrichtung umfasst außerdem eine erste und optional eine zweite Kommunikationsschnittstelle, über die eine oder mehrere Punkt-zu-Punkt-Verbindungen zu einem oder mehreren ersten Kraftfahrzeugen aufgebaut werden können. Darüber hinaus umfasst die Vorrichtung ein Mensch-Maschine-Interface, das zur Wiedergabe von durch fahrzeugeigene Sensoren und von anderen Kraftfahrzeugen gelieferten Sensor-Messergebnissen eingerichtet ist. Das Mensch-Maschine-Interface ist dabei auch dazu eingerichtet, Benutzereingaben entgegenzunehmen. Die Vorrichtung oder einzelne Komponenten davon weisen ein oder mehrere Mikroprozessoren auf, die mit flüchtigen oder nicht-flüchtigen Speichermitteln verbunden sind. Die ein oder mehreren Mikroprozessoren führen dabei Computer-Programminstruktionen aus, die vorzugsweise in den nichtflüchtigen Speichermitteln gespeichert sind, und deren Ausführung die Umsetzung einzelner oder mehrerer Schritte des erfindungsgemäßen Verfahrens bewirkt.

Eine in einem ersten Kraftfahrzeug vorgesehene Vorrichtung zur Ausführung des erfindungsgemäßen Verfahrens umfasst mindestens einen Sensor, der dazu eingerichtet ist, Objekte in der Umgebung des ersten Kraftfahrzeugs zu erfassen. Der Sensor ist beispielsweise eine Kameraanordnung, die mit einer entsprechenden Einrichtung zur Objekterkennung verbunden sein kann. Andere geeignete Sensoren sind beispielsweise Radarsensoren, Ultraschallsensoren, Lasersensoren und dergleichen. Die in dem ersten Kraftfahrzeug vorgesehene Vorrichtung umfasst außerdem eine erste und optional eine zweite Kommunikationsschnittstelle, über die eine Punkt-zu-Punkt-Verbindung zu einem zweiten Kraftfahrzeug aufgebaut werden kann. Die Vorrichtung umfasst darüber hinaus eine Steuereinheit, die von einem zweiten Kraftfahrzeug kommende Anforderungen für Sensormessungen evaluiert und ausführt, und die Übertragung der Sensor-Messergebnisse an das zweite Kraftfahrzeug auslöst. Die Vorrichtung oder einzelne Komponenten davon weisen ein oder mehrere Mikroprozessoren auf, die mit flüchtigen oder nichtflüchtigen Speichermitteln verbunden sind. Die ein oder mehreren Mikroprozessoren führen dabei Computer-Programminstruktionen aus, die vorzugsweise in den nichtflüchtigen Speicher mit den gespeichert sind, und deren Ausführung die Umsetzung einzelner oder mehrerer Schritte des erfindungsgemäßen Verfahrens bewirkt.

Die vorliegende Erfindung ermöglicht es einem Fahrer eines Fahrzeugs, auf Sensorsysteme anderer Fahrzeuge in der Umgebung zuzugreifen und Informationen auch zu Objekten, die sich nicht im Sichtbereich des Fahrers oder der Sensorsysteme seines Fahrzeugs befinden, zu erlangen. Die bidirektionale weitestgehend latenzfreie Punkt-zu-Punkt-Kommunikation ermöglicht es darüber hinaus, selektiv auf Sensorsysteme anderer Fahrzeuge zuzugreifen und deren Erfassungsbereiche so zu steuern, dass gezielt Informationen zu bestimmten ausgewählten Bereichen der Umgebung des Fahrzeugs erhalten werden. Durch den selektiven aktiven Zugriff auf Sensorsysteme anderer Fahrzeuge muss sich der Fahrer des Fahrzeugs nicht mehr auf Sendeintervalle der anderen Fahrzeuge verlassen, mit denen diese eventuell ausgewählte Informationen zu ihrer jeweiligen Umgebung an alle in der Umgebung befindlichen Empfänger ausstrahlen, wie dies in der Car-to-Car Kommunikation vorgesehen ist.

Ferner wird mit der dem Verfahren, Sensor-Daten über ein AE-SA-Radar von einem ersten Fahrzeug zu einem zweiten Fahrzeug mit Beamforming als Richtfunk zu senden, ein Verfahren präsentiert, dass ausreichend niedrige Latenzzeit bei der Übertragung und Fehlererkennung, gesicherte Authentisierung und Identifizierung ermöglicht, was zu einer Verwendung von externen Sensordaten aus einem ersten Fahrzeug in einem zweiten Fahrzeug unerlässlich ist. Wenn nun noch vom zweiten Fahrzeug Diagnosen der Sensorfunktionalität im ersten Fahrzeug, z. B. bei Erfassung gemeinsamer Teile des Verkehrsraumes, in notwendiger Häufigkeit durchgeführt werden, hat diese Kommunikationsverbindung von einem ersten Fahrzeug zu einem zweiten Fahrzeug eine ausreichende Zuverlässigkeit zur Verwendung für ADAS-Zwecke in einem zweiten Fahrzeug.

### Kurze Beschreibung der Zeichnung

Im Folgenden wird die Erfindung anhand der Figuren der Zeichnung beschrieben:
- Fig. 1: zeigt eine schematische Darstellung eines Verkehrsraums in der Umgebung eines zweiten Kraftfahrzeugs;
- Fig. 2: stellt von dem Fahrer des zweiten Kraftfahrzeugs bzw. von Sensoren in dem Kraftfahrzeug erfassbare Bereiche dar;
- Fig. 3: zeigt den Sichtbereich des Fahrers eines ersten Kraftfahrzeugs;
- Fig. 4: zeigt eine beispielhafte Kommunikation gemäß dem erfindungsgemäßen Verfahren zwischen einem zweiten und einem ersten Kraftfahrzeug;
- Fig. 5: zeigt einen auf die Anfrage des zweiten Kraftfahrzeugs von den Sensoren des ersten Kraftfahrzeugs erfassten Bereich;
- Fig. 6: zeigt ein schematisches beispielhaftes Blockdiagramm einer Vorrichtung in einem ersten Kraftfahrzeug; und
- Fig. 7: zeigt ein schematisches beispielhaftes Blockdiagramm einer Vorrichtung in einem zweiten Kraftfahrzeug.

In den Figuren sind gleiche oder ähnliche Elemente mit denselben Referenznummern bezeichnet.

### Beschreibung von Ausführungsformen

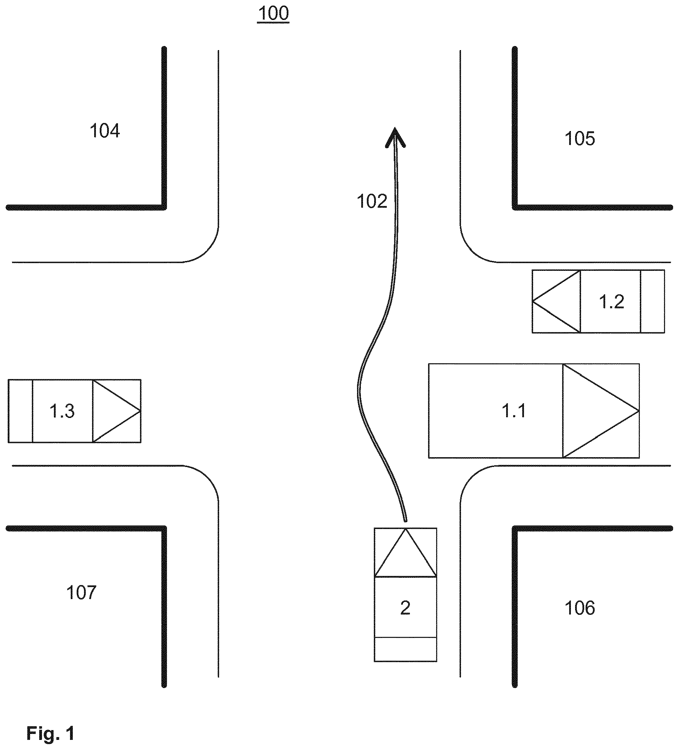

Figur 1 zeigt eine schematische Darstellung eines Verkehrsraums 100 in der Umgebung eines zweiten Kraftfahrzeugs 2. Der gegenwärtige Verkehrsraum ist eine Kreuzung zweier Straßen, wobei die allgemeine Vorfahrtsregelung "rechts vor links" gilt. Mehrere andere Fahrzeuge befinden sich in dem gegenwärtigen Verkehrsraum, und an den Ecken der Kreuzung befinden sich Gebäude 104-107, angedeutet durch die dicker gezeichneten Begrenzungslinien, denen Fußwege vorgelagert sind. Die Gebäude 104-107 und ein großes Fahrzeug 1.1, das in einer rechts abzweigenden Straße abgestellt ist, versperren einen Teil der Sicht auf den Verkehrsraum für den Fahrer des zweiten Fahrzeugs 2 und in dem zweiten Fahrzeug 2 angebrachte Sensoren. Der geplante Fahrweg des zweiten Kraftfahrzeugs 2 ist mit dem Pfeil 102 angedeutet. Der Fahrer des zweiten Kraftfahrzeugs 2 müsste dem Fahrzeug 1.2, welches von rechts kommt, die Vorfahrt gewähren, bevor er selbst die Kreuzung überqueren kann.

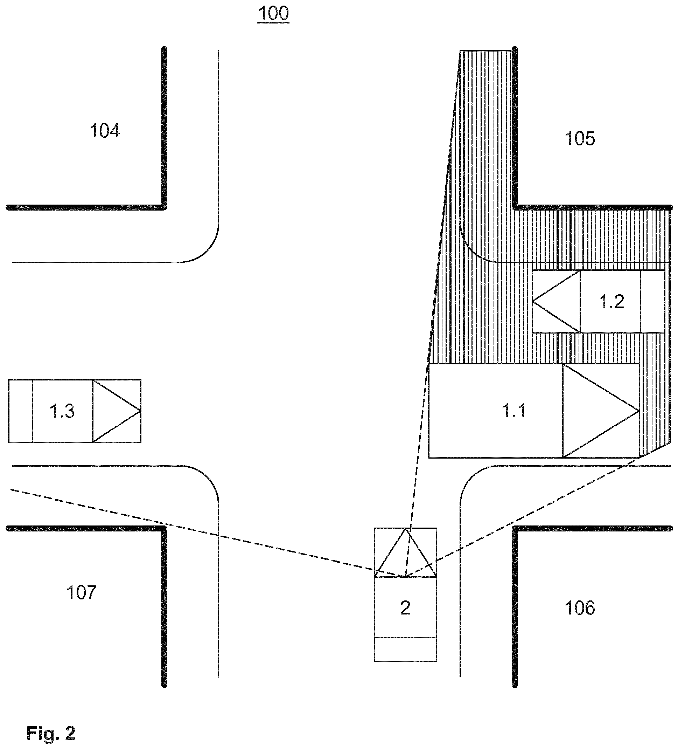

Die von dem Fahrer des zweiten Kraftfahrzeugs 2 bzw. die von Sensoren in dem Kraftfahrzeug erfassbaren Bereiche sind in Figur 2 dargestellt. Aus Gründen der Übersichtlichkeit sind in den Figuren die Erfassungsbereiche der Sensoren und der Sichtbereich des Fahrers als identisch angenommen. Der Sichtbereich des Fahrers wird links durch das Gebäude 107 begrenzt. Nach rechts wird der Sichtbereich des Fahrers durch das Gebäude 106 begrenzt. Zusätzlich blockiert das Fahrzeug 1.1 einen großen Teil der Sicht nach rechts. Der von dem Fahrer des Kraftfahrzeugs 2 nicht einsehbare Teil ist in der Figur schraffiert dargestellt. Es ist klar erkennbar, dass die Sicht auf das Kraftfahrzeug 1.2 durch das Kraftfahrzeug 1.1 blockiert ist. Würde der Fahrer des Kraftfahrzeugs 2 seinen geplanten Fahrweg fortsetzen besteht die Gefahr, dass er das Kraftfahrzeug 1.2 zu spät sieht und es zu einer Kollision kommt.

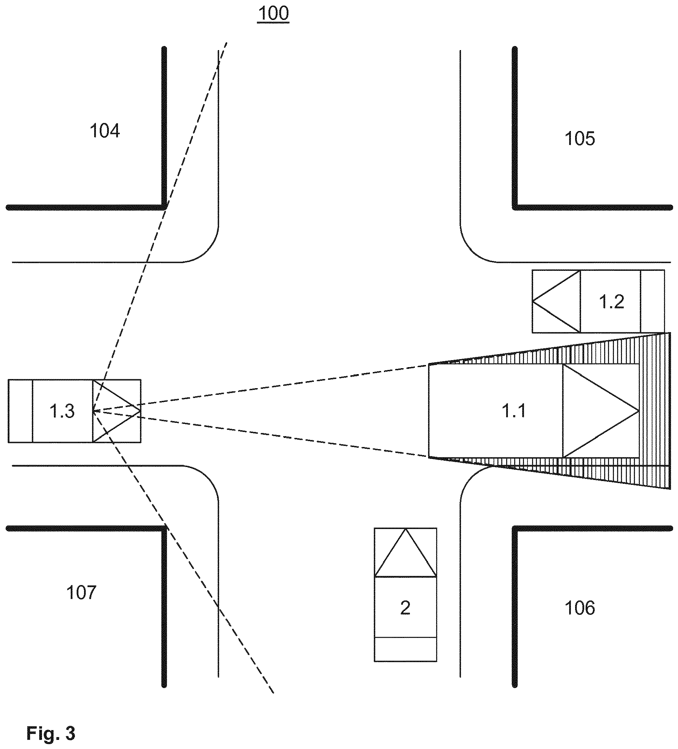

In Figur 3 ist der Sichtbereich des Fahrers des ersten Kraftfahrzeugs 1.3 dargestellt. Der Sichtbereich des Fahrers des Kraftfahrzeugs 1.3 ist nach links durch das Gebäude 104 und nach rechts durch das Gebäude 107 begrenzt. Nach vorne blockiert das Fahrzeug 1.1 einen schmalen Bereich. Wie zuvor in Figur 2 ist der von dem Fahrer des Kraftfahrzeugs 1.3 nicht einsehbare Bereich schraffiert dargestellt. Das Fahrzeug 1.2 liegt vollständig im Sichtbereich des Fahrers des Fahrzeugs 1.3.

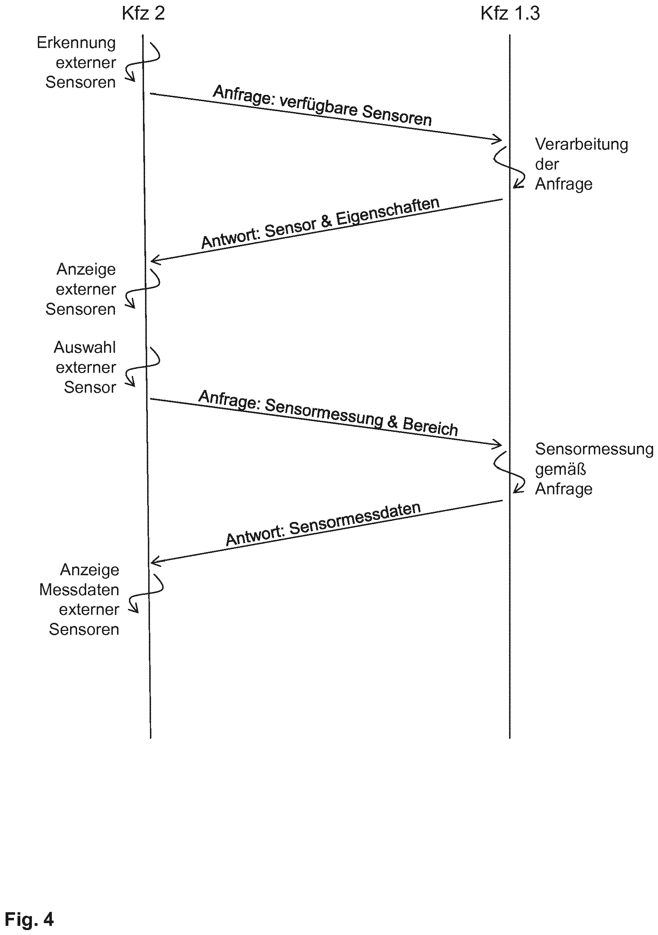

In Figur 4 ist eine beispielhafte Kommunikation gemäß dem erfindungsgemäßen Verfahren zwischen einem zweiten und einem ersten Kraftfahrzeug für die in den Figuren 1 bis 3 gezeigte Verkehrssituation dargestellt. Das zweite Kraftfahrzeug 2 ist mit einer Vorrichtung ausgestattet, die die Umgebung des zweiten Kraftfahrzeugs 2 nach externen Sensoren absucht, deren Messergebnisse über ein Mensch-Maschine-Interface in dem zweiten Kraftfahrzeug angezeigt werden können. Die Vorrichtung ist beispielsweise eine Kamera, die den vor dem zweiten Kraftfahrzeug 2 liegenden Verkehrsraum nach anderen Kraftfahrzeugen absucht. In dem Beispiel auf den Figuren 1 bis 3 wird das erste Kraftfahrzeug 1.3 von der Kamera erfasst. Nach dem erfindungsgemäßen Verfahren sendet eine in dem zweiten Kraftfahrzeug 2 vorgesehene Vorrichtung eine Anfrage an das erste Kraftfahrzeug 1.3, ob und wenn ja welche Sensoren ihre Messergebnisse an das zweite Kraftfahrzeug 2 übertragen können. Die Anfrage kann über eine erste Punkt-zu-Punkt-Verbindung gesendet werden, welche über eine erste Kommunikationsschnittstelle aufgebaut wird. Das erste Kraftfahrzeug 1.3 empfängt und verarbeitet die Anfrage in einer entsprechenden Vorrichtung. Im vorliegenden Beispiel soll das erste Kraftfahrzeug 1.3 ebenfalls mit einer Kamera ausgestattet sein, welche den vor dem ersten Kraftfahrzeug 1.3 liegenden Verkehrsraum erfasst. Die Vorrichtung in dem ersten Kraftfahrzeug 1.3 sendet eine Antwort an das zweite Kraftfahrzeug 2 mit Informationen zu verfügbaren Sensoren und deren Eigenschaften. Die Eigenschaften von Sensoren umfassen beispielsweise einen Erfassungsbereich, einen vertikalen und/oder horizontalen Schwenkbereich, Informationen über die räumliche und/oder zeitliche Auflösung und/oder die Reichweite des Sensors und dergleichen. Die Antwort kann über die zuvor aufgebaute erste Punkt-zu-Punkt-Verbindung gesendet werden. Die Vorrichtung in dem zweiten Kraftfahrzeug 2 zeigt dem Fahrer die verfügbaren externen Sensoren und optional auch deren Anordnung im Verkehrsraum sowie deren Erfassungsbereiche an. Der Fahrer wählt einen oder mehrere externe Sensoren aus, von denen er Messergebnisse angezeigt bekommen möchte und gibt optional an, welcher Bereich des Verkehrsraums mittels der Sensoren erfasst werden soll. Die Vorrichtung im zweiten Kraftfahrzeug 2 sendet eine entsprechende Anfrage an das erste Kraftfahrzeug 1.3, welches eine entsprechende Sensormessung durchführt und die Sensormessdaten an das zweite Kraftfahrzeug 2 sendet. Das Mensch-Maschine-Interface im zweiten Kraftfahrzeug 2 zeigt die empfangenen und gegebenenfalls weiterverarbeiteten Sensormessdaten an, sodass sich der Fahrer des zweiten Kraftfahrzeugs 2 einen Überblick über die Verkehrssituation verschaffen kann. Der Kommunikationsaufbau ist in diesem Diagramm nicht gezeigt. Ferner sind Authentisierungsvorgänge und Fehlerüberwachungen, gleichwohl ebenfalls zumindest optional vorgesehen, nicht gezeigt.

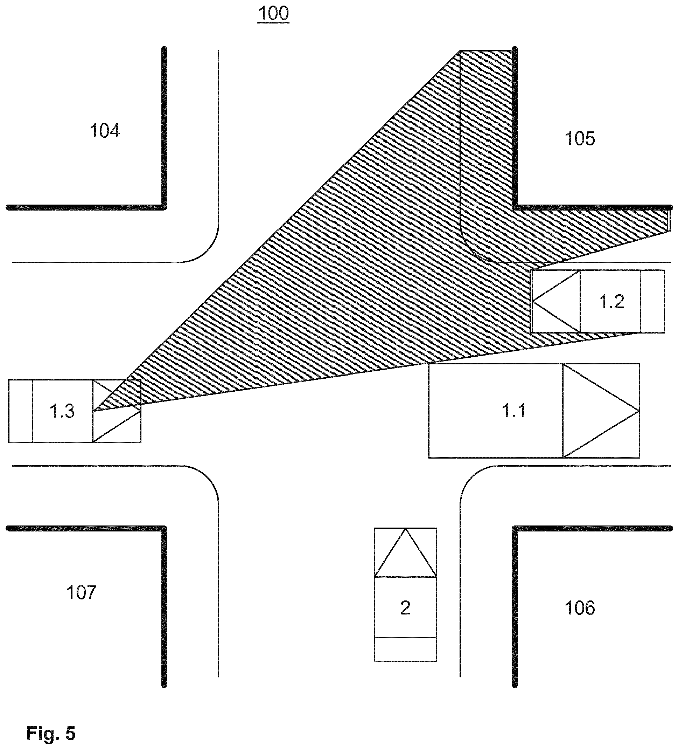

Figur 5 zeigt den Verkehrsraum aus den Figuren 1 bis 3 und zeigt den auf die Anfrage des zweiten Kraftfahrzeugs 2 von den Sensoren des ersten Kraftfahrzeugs 1.3 erfassten Bereich. In der Figur ist der von den Sensoren des ersten Kraftfahrzeugs 1.3 erfasste Bereich schraffiert dargestellt. Es ist klar erkennbar, dass nicht der gesamte mögliche Erfassungsbereich der Sensoren des ersten Kraftfahrzeugs 1.3 tatsächlich abgetastet wird. Insbesondere der aus Sicht des ersten Kraftfahrzeugs 1.3 rechte Bereich wird nicht abgetastet, weil dieser Bereich von dem Fahrer des zweiten Kraftfahrzeugs 2 gut einsehbar ist. In der Anfrage zur Sensormessung, die die Vorrichtung des zweiten Kraftfahrzeugs 2 an das erste Kraftfahrzeug 1.3 gesendet hat, ist der zu erfassende Senderbereich entsprechend spezifiziert gewesen.

In einer Ausführungsform des vorliegenden Verfahrens werden Live-Kamerabilder von dem ersten Kraftfahrzeug 1.3 an das zweite Kraftfahrzeug 2 gesendet. Wenn der Sensor in den ersten Kraftfahrzeug 1.3 keine Kamera ist, sondern beispielsweise ein Lidarsystem oder ein Radarsystem kann anstelle der Live-Kamerabilder auch eine Information über die Existenz eines Objekts sowie dessen Position in dem spezifizierten Messbereich übermittelt werden. Wenn die Vorrichtung in dem ersten Kraftfahrzeug 1.3 über eine entsprechende Rechnerkapazität und Programmcodemittel verfügt kann aus den Messdaten auch ein Symbol generiert werden, welches ein im Messbereich befindliches Objekt repräsentiert. In diesem Fall muss lediglich das Symbol sowie seine Position im Verkehrsraum übertragen werden. Je nach Sensorausstattung kann die Position aus Bildern einer Kamera oder aus entsprechenden Messwerten eines Lidarsystems oder Radarsystems ermittelt werden. Die Position kann dabei beispielsweise über eine Entfernung und Richtung relativ zu dem ersten Kraftfahrzeug 1.3 beschrieben werden oder über daraus ermittelte absolute Geopositionsdaten. Auf eine Betrachtung dieser Abläufe in Bezug auf ADASIS-Konzepte wird an dieser Stelle verzichtet.

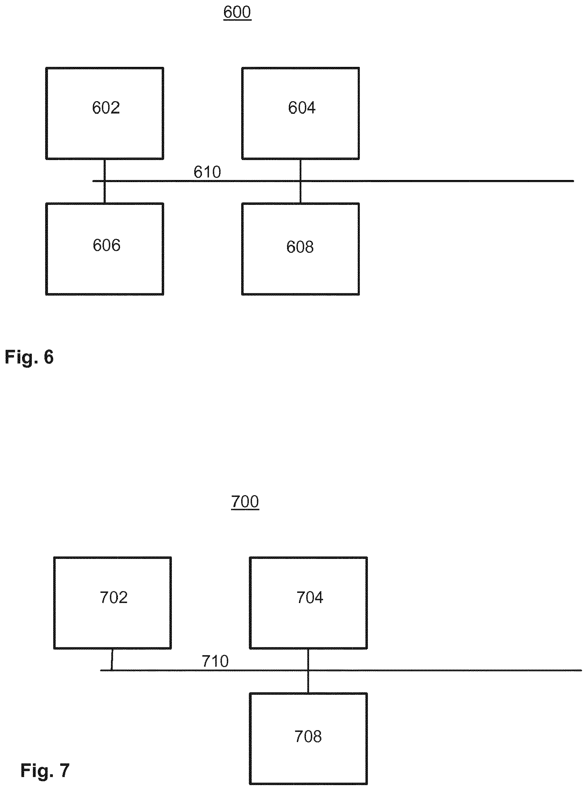

Figur 6 zeigt ein schematisches beispielhaftes Blockschaltbild einer Vorrichtung 600 zur Ausführung des erfindungsgemäßen Verfahrens in einem zweiten Kraftfahrzeug. Ein Sensor 602, eine Kommunikationsschnittstelle 604, ein Mensch-Maschine-Interface 606 und ein Steuergerät 608 mit einem Mikroprozessor sowie flüchtigen und nichtflüchtigen Speichermitteln sind über ein oder mehrere Kommunikationsleitungen oder Kommunikationsbusse 610 miteinander verbunden. Jede der Komponenten 602-606 kann ebenfalls einen Mikroprozessor sowie flüchtige und nichtflüchtige Speichermittel aufweisen. Der oder die Mikroprozessoren führen Computer-Programminstruktionen aus, die die Umsetzung einzelner oder mehrerer Schritte des erfindungsgemäßen Verfahrens bewirken. Optional können weitere (nicht in der Figur gezeigte) Komponenten vorhanden sein, etwa ein Baustein, der eine gemeinsame Datafusion von lokalen und entfernten Sensordaten durchführt, ferner ein Baustein, der unter Verwendung der Daten von des Sensorfusions-Bausteins Vorhersagen für das Verhalten der erfassten Objekte wie Fahrzeuge, Fußgänger usw. erstellt, insbesondere auch für die, die nicht oder zeitweise nicht mit eigenen Sensoren erfasst werden können, oder ein Baustein, der die Ergebnisse der Vorhersage auch unter Verwendung von Kartendaten usw. in visuell präsentierbaren Datenstrukturen, z. B. für eine Ausgabe per Augmented Reality, zusammenführt.

Figur 7 zeigt ein schematisches beispielhaftes Blockschaltbild mit einer Vorrichtung 700 zur Ausführung des erfindungsgemäßen Verfahrens in einem ersten Kraftfahrzeug. Ein Sensor 702, eine Kommunikationsschnittstelle 704 und ein Steuergerät 708 mit einem Mikroprozessor sowie flüchtigen und nichtflüchtigen Speichermitteln sind über ein oder mehrere Kommunikationsleitungen oder Kommunikationsbusse 710 miteinander verbunden. Jede der Komponenten 702 oder 704 kann ebenfalls einen Mikroprozessor sowie flüchtige und nichtflüchtige Speichermittel aufweisen. Der oder die Mikroprozessoren führen Computer-Programmfunktionen aus, die die Umsetzung einzelner oder mehrerer Schritte des erfindungsgemäßen Verfahrens bewirken.

## Patentansprüche

1. Verfahren zur Darstellung von Sensordaten eines oder mehrerer erster Kraftfahrzeuge über ein Mensch-Maschine-Interface eines zweiten Kraftfahrzeugs, umfassend:
- Darstellen eines Bildes zumindest eines Teils einer Umgebung des zweiten Kraftfahrzeugs über das Mensch-Maschine-Interface des zweiten Kraftfahrzeugs, wobei ein oder mehrere erste Kraftfahrzeuge zumindest teilweise abgebildet werden,
- Empfangen einer Benutzereingabe, die einer Auswahl eines oder mehrerer der auf dem Bild der Umgebung abgebildeten erster Kraftfahrzeuge entspricht,
- Aufbau einer oder mehrerer individueller erster Punkt-zu-Punkt-Verbindungen von dem zweiten zu dem oder den ausgewählten ersten Kraftfahrzeugen über eine erste drahtlose Kommunikationsschnittstelle,
- Senden einer Anfrage an das oder die ausgewählten ersten Kraftfahrzeuge über die jeweilige individuelle erste Punkt-zu-Punkt-Verbindung, Informationen zu verfügbaren Sensoren und deren Eigenschaften an das zweite Kraftfahrzeug zu übertragen,
- Empfangen der Antworten von ein oder mehreren der ausgewählten ersten Kraftfahrzeuge und Wiedergeben einer schematischen Darstellung der Umgebung des zweiten Kraftfahrzeugs, wobei die schematische Darstellung Positionen des zweiten und der ein oder mehreren ersten Kraftfahrzeuge in der Umgebung des zweiten Kraftfahrzeugs zeigt, wobei die schematische Darstellung in dem einen oder den mehreren ersten Kraftfahrzeugen verfügbaren Sensoren zeigt, und wobei in der schematischen Darstellung Bereiche dargestellt werden, innerhalb derer die verfügbaren Sensoren der einen oder mehreren ersten Kraftfahrzeuge und/oder die Sensoren des zweiten Kraftfahrzeugs Objekte erfassen können,
- Empfangen einer Benutzereingabe, die einer Auswahl eines oder mehrerer der in der schematischen Darstellung gezeigten Sensoren und eines sensorisch zu erfassenden Bereichs entspricht,
- Senden einer entsprechenden Anfrage an ein oder mehrere erste Kraftfahrzeuge, deren Sensoren den zu erfassenden Bereich erfassen können, und
- Empfangen entsprechender Sensordaten für eine nachfolgende Wiedergabe über das Mensch-Maschine-Interface des zweiten Kraftfahrzeugs.

2. Verfahren nach Anspruch 1, wobei der Aufbau der einen oder mehreren individuellen ersten Punkt-zu-Punkt-Verbindungen nach entsprechender Ausrichtung einer ersten Sende- oder Empfangsvorrichtung in Richtung der entsprechenden ausgewählten ein oder mehreren ersten Kraftfahrzeuge erfolgt.

3. Verfahren nach Anspruch 2, wobei die Ausrichtung der ersten Sende- oder Empfangsvorrichtung anhand von zuvor aus dem Bild der Umgebung des zweiten Kraftfahrzeugs ermittelten Azimut- und Elevationswinkeln für das oder die ausgewählten ersten Kraftfahrzeuge erfolgt.

4. Verfahren nach Anspruch 1, wobei in der schematischen Darstellung in der Umgebung des zweiten Kraftfahrzeugs und/oder in den jeweiligen Umgebungen der ein oder mehreren ersten Kraftfahrzeuge befindliche Objekte gezeigt werden.

5. Verfahren nach Anspruch 1, wobei ausgewählte erste Kraftfahrzeuge, von denen keine Antwort auf die Anfrage erfolgt, in der schematischen Darstellung entsprechend gekennzeichnet werden.

6. Verfahren nach Anspruch 1, wobei die schematische Darstellung die Umgebung des zweiten Kraftfahrzeugs aus der Vogelperspektive zeigt.

7. Verfahren nach Anspruch 1, wobei in Antwort auf eine entsprechende Anfrage aktualisierte Sensordaten von einem oder mehreren ersten Kraftfahrzeugen für einen vorab festgelegten Zeitraum oder bis zu einer Aufforderung, die Übertragung einzustellen, zyklisch empfangen werden.

8. Verfahren nach Anspruch 7, wobei die Sensordaten Informationen von einem Radarsystem, einem Lidarsystem, einer Videokamera und oder einem Ultraschallsystem repräsentieren.

9. Verfahren nach Anspruch 1, umfassend:
- Ansteuerung von jeweiligen Radarsystemen in dem zweiten und dem einen oder den mehreren ersten Kraftfahrzeugen zur Ausrichtung eines von dem Radarsystem erfassten Bereichs auf das erste bzw. zweite Kraftfahrzeug mittels elektronisch gesteuerter Richtung und Apertur,
- Senden der Anfragen und Empfangen der Antworten auf die
Anfragen über die jeweiligen ausgerichteten Radarsysteme.

10. Verfahren nach Anspruch 1, wobei Antworten über eine jeweilige zweite Punkt-zu-Punkt-Verbindung empfangen werden, welche über eine zweite drahtlose Kommunikationsschnittstelle aufgebaut wird.

11. Vorrichtung zur Darstellung von Sensordaten eines oder mehrerer erster Kraftfahrzeuge über ein Mensch-Maschine-Interface eines zweiten Kraftfahrzeugs, wobei die Vorrichtung einen Sensor (602), eine Kommunikationsschnittstelle (604), ein Mensch-Maschine-Interface (606) und ein mindestens Steuergerät (608) aufweist, die über einen oder mehrere Kommunikationsleitungen oder Kommunikationsbusse (610) miteinander verbunden sind, wobei das mindestens eine Steuergerät (608) flüchtige und nichtflüchtige Speichermittel aufweist, und wobei die Vorrichtung dazu eingerichtet ist, das Verfahren nach einem oder mehreren der Ansprüche 1 bis 10 auszuführen, wenn das mindestens eine Steuergerät (608) entsprechende, in den nichtflüchtigen Speichermitteln gespeicherte Computer-Programminstruktionen ausführt.

12. Kraftfahrzeug mit einer Vorrichtung nach Anspruch 11.

## Claims

1. Method for depicting sensor data of one or more first motor vehicle(s) via a human-machine interface of a second motor vehicle, comprising:
- depicting an image of at least part of surroundings of the second motor vehicle via the human-machine interface of the second motor vehicle, wherein one or more first motor vehicle(s) is/are mapped at least in part,
- receiving a user input that corresponds to a selection of one or more of the first motor vehicles mapped on the image of the surroundings,
- setting up one or more individual first point-to-point connection(s) from the second to the selected first motor vehicle(s) via a first wireless communication interface,
- sending a request to the selected first motor vehicle(s) via the respective individual first point-to-point connection to transmit information pertaining to available sensors and the properties thereof to the second motor vehicle,
- receiving the responses from one or more of the selected first motor vehicles and reproducing a schematic depiction of the surroundings of the second motor vehicle, wherein the schematic depiction shows positions of the second and the one or more first motor vehicle(s) in the surroundings of the second motor vehicle, wherein the schematic depiction shows sensors available in the one or more first motor vehicle(s), and wherein the schematic depiction depicts areas within which the available sensors of the one or more first motor vehicle(s) and/or the sensors of the second motor vehicle can pick up objects,
- receiving a user input that corresponds to a selection of one or more of the sensors shown in the schematic depiction and of an area to be picked up by sensor,
- sending an applicable request to one or more first motor vehicle(s) whose sensors can pick up the area to be picked up, and
- receiving applicable sensor data for a subsequent reproduction via the human-machine interface of the second motor vehicle.

2. Method according to Claim 1, wherein the one or more individual first point-to-point connection(s) is/are set up after applicable orientation of a first transmission or reception apparatus in the direction of the applicable selected one or more first motor vehicle(s).

3. Method according to Claim 2, wherein the first transmission or reception apparatus is oriented on the basis of angles of azimuth and elevation for the selected first motor vehicle (s) that are ascertained from the image of the surroundings of the second motor vehicle beforehand.

4. Method according to Claim 1, wherein the schematic depiction shows objects located in the surroundings of the second motor vehicle and/or in the respective surroundings of the one or more first motor vehicle(s).

5. Method according to Claim 1, wherein selected first motor vehicles that provide no response to the request are denoted in applicable fashion in the schematic depiction.

6. Method according to Claim 1, wherein the schematic depiction shows a bird's-eye view of the surroundings of the second motor vehicle.

7. Method according to Claim 1, wherein sensor data updated in response to an applicable request are received cyclically from one or more first motor vehicle(s) for a previously stipulated period or up until a call to stop the transmission.

8. Method according to Claim 7, wherein the sensor data represent information from a radar system, a lidar system, a video camera and/or an ultrasonic system.

9. Method according to Claim 1, comprising:
- actuating respective radar systems in the second and the one or more first motor vehicle(s) to orient an area picked up by the radar system to the first or second motor vehicle by means of electronically controlled direction and aperture,
- sending the requests and receiving the responses to the requests via the respective oriented radar systems.

10. Method according to Claim 1, wherein responses are received via a respective second point-to-point connection, which is set up via a second wireless communication interface.

11. Apparatus for depicting sensor data of one or more first motor vehicle(s) via a human-machine interface of a second motor vehicle, wherein the apparatus has a sensor (602), a communication interface (604), a human-machine interface (606) and at least one controller (608) that are connected to one another via one or more communication line(s) or communication bus(es) (610), wherein the at least one controller (608) has volatile and nonvolatile memory means, and wherein the apparatus is configured to carry out the method according to one or more of Claims 1 to 10 when the at least one controller (608) executes applicable computer program instructions stored in the nonvolatile memory means.

12. Motor vehicle having an apparatus according to Claim 11.

## Revendications

1. Procédé de représentation de données de capteur d'un ou de plusieurs premiers véhicules automobiles par l'intermédiaire d'une interface homme-machine d'un deuxième véhicule automobile, comprenant :
- la représentation d'une image d'au moins une partie d'un environnement du deuxième véhicule automobile par l'intermédiaire de l'interface homme-machine du deuxième véhicule automobile, un ou plusieurs premiers véhicules automobiles étant au moins en partie reproduits,
- la réception d'une entrée utilisateur, qui correspond à un choix d'un ou de plusieurs des premiers véhicules automobiles reproduits sur l'image de l'environnement,
- l'établissement d'une ou de plusieurs premières liaisons point à point individuelles à partir du deuxième jusqu'au ou aux premiers véhicules automobiles choisis par l'intermédiaire d'une première jonction de communication sans fil,
- l'envoi d'une demande au ou aux premiers véhicules automobiles choisis par l'intermédiaire de la première liaison point à point individuelle respective, de transfert d'informations sur des capteurs disponibles et leurs propriétés au deuxième véhicule automobile,
- la réception des réponses à partir d'un ou de plusieurs des premiers véhicules automobiles choisis et la restitution d'une représentation schématique de l'environnement du deuxième véhicule automobile, la représentation schématique montrant des positions du deuxième et du ou des premiers véhicules automobiles dans l'environnement du deuxième véhicule automobile, la représentation schématique montrant les capteurs disponibles dans le ou les premiers véhicules automobiles, et des zones étant représentées dans la représentation schématique, à l'intérieur desquelles les capteurs disponibles du ou des premiers véhicules automobiles et/ou les capteurs du deuxième véhicule automobile peuvent détecter des objets,
- la réception d'une entrée utilisateur, qui correspond à un choix d'un ou de plusieurs des capteurs montrés dans la représentation schématique et d'une zone à détecter par les capteurs,
- l'envoi d'une demande correspondante à un ou plusieurs premiers véhicules automobiles, dont les capteurs peuvent détecter la zone à détecter, et
- la réception de données de capteur correspondantes pour une prochaine restitution par l'intermédiaire de l'interface homme-machine du deuxième véhicule automobile.

2. Procédé selon la revendication 1, dans lequel l'établissement de la ou des premières liaisons point à point individuelles a lieu après une orientation appropriée d'un premier dispositif d'envoi ou de réception dans la direction du ou des premiers véhicules automobiles choisis correspondants.

3. Procédé selon la revendication 2, dans lequel l'orientation du premier dispositif d'envoi ou de réception a lieu à l'aide d'angles d'azimut et d'élévation pour le ou les premiers véhicules automobiles choisis, déterminés auparavant à partir de l'image de l'environnement du deuxième véhicule automobile.

4. Procédé selon la revendication 1, dans lequel des objets se trouvant dans l'environnement du deuxième véhicule automobile et/ou dans les environnements respectifs du ou des premiers véhicules automobiles sont montrés dans la représentation schématique.

5. Procédé selon la revendication 1, dans lequel des premiers véhicules automobiles choisis, desquels aucune réponse à la demande n'a lieu, sont caractérisés de manière appropriée dans la représentation schématique.

6. Procédé selon la revendication 1, dans lequel la représentation schématique montre l'environnement du deuxième véhicule automobile de la perspective aérienne.

7. Procédé selon la revendication 1, dans lequel, en réponse à une demande appropriée, des données de capteur actualisées sont reçues cycliquement à partir d'un ou de plusieurs premiers véhicules automobiles pendant une période de temps fixée auparavant ou jusqu'à une invitation à ajuster le transfert.

8. Procédé selon la revendication 7, dans lequel les données de capteur représentent des informations d'un système de radar, d'un système de lidar, d'une caméra vidéo ou d'un système à ultrasons.

9. Procédé selon la revendication 1, comprenant :
- la commande de systèmes de radar respectifs dans le deuxième et le ou les premiers véhicules automobiles pour l'orientation d'une zone détectée par le système de radar sur le premier ou le deuxième véhicule automobile au moyen d'une direction commandée électroniquement et d'une ouverture,
- l'envoi des demandes et la réception des réponses aux demandes par l'intermédiaire des systèmes de radar orientés respectifs.

10. Procédé selon la revendication 1, dans lequel des réponses sont reçues par l'intermédiaire d'une deuxième liaison point à point respective, qui est établie par l'intermédiaire d'une deuxième jonction de communication sans fil.

11. Dispositif pour la représentation de données de capteur d'un ou de plusieurs premiers véhicules automobiles par l'intermédiaire d'une interface homme-machine d'un deuxième véhicule automobile, le dispositif comprenant un capteur (602), une jonction de communication (604), une interface homme-machine (606) et au moins un appareil de commande (608), qui sont reliés les uns avec les autres par l'intermédiaire d'une ou de plusieurs conduites de communication ou d'un ou de plusieurs bus de communication (610), ledit au moins un appareil de commande (608) comprenant des moyens de stockage volatils et non volatils, et le dispositif étant conçu pour réaliser le procédé selon une ou plusieurs des revendications 1 à 10, lorsque ledit au moins un appareil de commande (608) réalise des instructions de programme informatique stockées dans les moyens de stockage non volatils correspondants.

12. Véhicule automobile comprenant un dispositif selon la revendication 11.
